# EUROPEAN PATENT SPECIFICATION

(11) **EP 4 365 727 B1**
(45) Date of publication and mention of the grant of the patent: **14.01.2026**
(21) Application number: 23202712.8
(22) Date of filing: 10.10.2023
(51) Int. Cl.: G06F 3/06, G06F 13/16, G06F 13/28, G06F 12/0815

(54) **SYSTEMS AND METHODS FOR COMPUTATIONAL ACCELERATION**
SYSTEME UND VERFAHREN ZUR RECHNERISCHEN BESCHLEUNIGUNG
SYSTÈMES ET PROCÉDÉS D'ACCÉLÉRATION INFORMATIQUE

(30) Priority: 04.11.2022 US 202263422915 P; 03.01.2023 US 202318092925
(43) Date of publication of application: 08.05.2024
(73) Proprietor: Samsung Electronics Co., Ltd., Suwon-si, Gyeonggi-do 16677 (KR)
(72) Inventor: NGUYEN, Marie Mai, San Jose, CA, 95134 (US); PITCHUMANI, Rekha, San Jose, CA, 95134 (US); LI, Zongwang, San Jose, CA, 95134 (US); KI, Yang Seok, San Jose, CA, 95134 (US)
(74) Representative: Kuhnen & Wacker Patent- und Rechtsanwaltsbüro PartG mbB

(56) References cited:
- US-A1- 2019 018 806
- US-A1- 2022 083 273

## Description

### FIELD

The disclosure relates generally to accelerators, and more particularly to managing access to accelerator output.

### BACKGROUND

Data centers may generate large amount of data during processing. To use this data, the data may be moved to a host memory, where it may be accessed by an application.

A need remains to improve access to output.

US 2019/018806 A1 discloses techniques for managing access to hardware accelerator memory. In particular this document discloses an apparatus comprising a host processor, a host memory connected to the host processor, a disk, and an accelerator including an accelerator memory comprising a plurality of regions. Accelerator and host processor may communicate using interconnect fabrics that allow data and messages to pass therebetween.

### SUMMARY

The invention is set out in the appended set of claims. Embodiments of the disclosure include a system, comprising: a host processor; a host memory connected to the host processor; a storage device connected to the host processor; and an accelerator communicating with the host processor, the accelerator configured to produce an output, the accelerator including a local memory, the local memory including a first region and a second region, the first region of the local memory of the accelerator supporting a first mode, the second region of the local memory of the accelerator supporting a second mode, wherein the accelerator is configured to store the output of the accelerator in a destination, the destination including the host memory, the storage device, the first region of the local memory of the accelerator, or the second region of the local memory of the accelerator.

Embodiments of the disclosure include a method, comprising, sending a request from a host processor to an accelerator, the request identifying a data to be processed by the accelerator, the accelerator including a local memory, the local memory including a first region and a second region, the first region of the local memory of the accelerator supporting a first mode, the second region of the local memory of the accelerator supporting a second mode; and copying an output of the accelerator from the first region of the local memory of the accelerator by the host processor to a destination, wherein the destination is one of a host memory or a storage device.

Embodiments of the disclosure include a method, comprising, sending a request from a host processor to an accelerator, the request identifying a data to be processed by the accelerator, the accelerator including a local memory, the local memory including a first region and a second region, the first region of the local memory of the accelerator supporting a first mode, the second region of the local memory of the accelerator supporting a second mode, sending a destination for an output of the accelerator from the host processor to the accelerator and accessing the output by the host processor from the destination, wherein the destination is one of a host memory, a storage device, the first region of the local memory of the accelerator, or the second region of the local memory of the accelerator.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a system including an accelerator that may support improved access to accelerator output, according to embodiments of the disclosure.
FIG. 2 shows details of the machine of FIG. 1, according to embodiments of the disclosure.
FIG. 3A shows how a data mover may move the output of the accelerator of FIG. 1, according to embodiments of the disclosure.
FIG. 3B shows how the accelerator of FIG. 1 may store the output, according to embodiments of the disclosure.
FIG. 4 shows a flowchart of an example procedure for the system of FIG. 1, including the data mover of FIG. 3A, to move the output of the accelerator of FIG. 1, according to embodiments of the disclosure.
FIG. 5 shows a flowchart of an example procedure for the data mover of FIG. 3A to select a destination for the output of the accelerator of FIG. 1, according to embodiments of the disclosure.
FIG. 6 shows a flowchart of an example procedure for the accelerator of FIG. 1 to store the output, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Accelerators provide for offloading of processing from the host processor. Depending on their location within the system, accelerators may also be able to access data directly from a storage device, which may provide for near-data processing. By accessing the data directly from the storage device, the time used to transfer data from the storage device to the host memory may be reduced or eliminated, resulting in faster processing.

Accelerators may store any output in a Device Local Memory (DLM). The host may then access the output from the DLM of the accelerator.

But before the host may use the output of the accelerator, the host may transfer the data from the DLM to the host memory. This additional data transfer operation may take additional time, which might offset the benefit of using the accelerator to perform the processing.

Embodiments of the disclosure address these issues by permitting the host to either access the data directly from the accelerator DLM or by managing the movement of the data, either to host memory or to persistent storage (i.e., non-volatile storage). The data management is performed using a data mover (which may reside on the host) or by using Application Programming Interface (API) commands. The API commands may enable the accelerator to output the data directly to a target destination. Within the accelerator DLM, the output may be stored in either a host bias region or a device bias region. A data mover may orchestrate data movement automatically, and is based on data hotness, memory speed, memory distance, data size, or persistency, among other criteria.

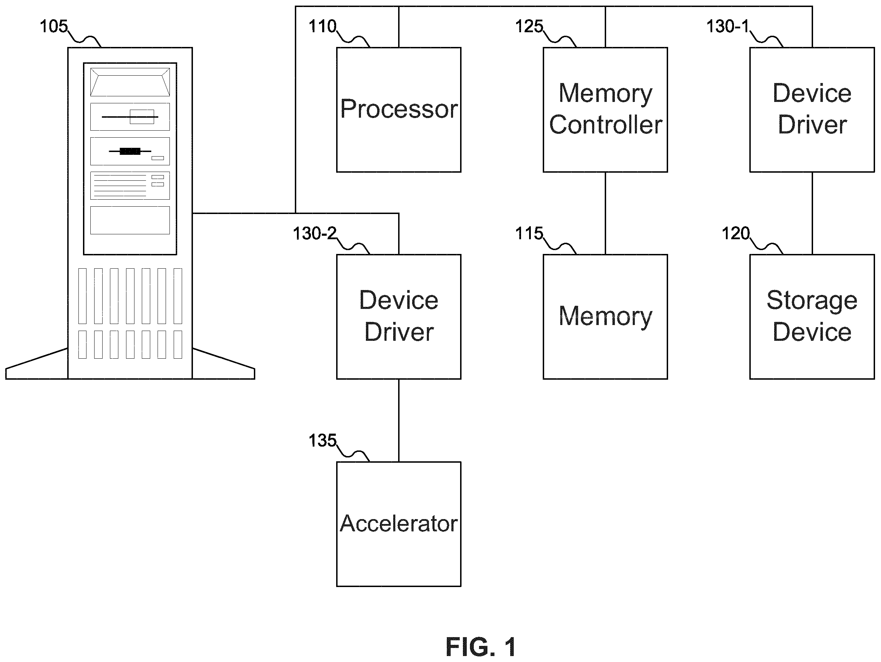

FIG. 1 shows a system including an accelerator that may support improved access to accelerator output, according to embodiments of the disclosure. In FIG. 1, machine 105, which may also be termed a host or a system, may include processor 110, memory 115, and storage device 120. Processor 110 may be any variety of processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 (which may also be called a host memory or a system memory) may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115. When storage device 120 is used to support applications reading or writing data via some sort of file system, storage device 120 may be accessed using device driver 130-1. While FIG. 1 shows one storage device 120, there may be any number of storage devices in machine 105. Storage device 120 may support any desired protocol or protocols, including, for example, the Non-Volatile Memory Express (NVMe) protocol. Different storage devices 120 may support different protocols and/or interfaces. For example, storage device 120 might support a cache coherent interconnect protocol, which may support both block-level protocol (or any other higher level of granularity) access and byte-level protocol (or any other lower level of granularity) access to data on storage device 120. An example of such a cache coherent interconnect protocol is the Compute Express Link (CXL) protocol, which supports accessing data in blocks using the CXL.io protocol and accessing data in bytes using the CXL.mem protocol. In this manner, data on a CXL storage device may be accessed as either block-level data (like a Solid State Drive (SSD)) or byte-level data (such as a memory): the CXL storage device may be used to extend the system memory. In some embodiments of the disclosure, the CXL storage device may function solely to extend the system memory; in other embodiments of the disclosure, the CXL storage device may be used both to extend system memory and to function as a storage device (that is, to process file system requests to access data on the storage device). In some embodiments of the disclosure, storage device 120 may include both non-volatile storage (for example, flash memory) and volatile memory (for example, DRAM): the volatile memory may be used as a cache for data stored in the non-volatile storage.

While FIG. 1 uses the generic term "storage device", embodiments of the disclosure may include any storage device formats that may benefit from the use of computational storage units, examples of which may include hard disk drives and SSDs. Any reference to "SSD" below should be understood to include such other embodiments of the disclosure. Further, different types of storage devices may be mixed. For example, one storage device 120 might be a hard disk drive, and another storage device 120 might be an SSD.

Machine 105 may be connected to a network (not shown in FIG. 1). The network may be any variety of network. The network may be a wired network or a wireless network. The network may be a Local Area Network (LAN), a Wide Area Network (WAN), a Metropolitan Area Network (MAN), or a world-wide network, such as the Internet, among other possibilities. The network may also include portions that may be different types of networks. For example, the network might include a wired portion and a wireless portion, or the network might include various LANs connected by the Internet.

To interface with the network, machine 105 may have a component (not shown in FIG. 1) to interface with the network. This component may be, for example, a network interface card.

Machine 105 may also include accelerator 135 (in some embodiments of the disclosure, accelerator 135 may also be called a computational storage unit or a computational storage device). Accelerator 135 may provide additional processing capability beyond that offered by processor 110. Accelerator 135 may offer any desired functionality. For example, in some embodiments of the disclosure, accelerator 135 may provide for offloading of processing from processor 110, which may free processor 110 to perform other tasks. In addition, in some embodiments of the disclosure, accelerator 135 may be used for near-data processing, accessing data from storage device 120 rather than having to load data from storage device 120 into memory 115 before processor 110 may process the data. In some embodiments of the disclosure, accelerator 135 may implement specific functions; in other embodiments of the disclosure, accelerator 135 may support downloading custom programs to be executed on data. In some embodiments of the disclosure, accelerator 135 may be separate from storage device 120 as shown; in other embodiments of the disclosure, accelerator 135 may be combined with storage device 120 into a single component. Accelerator 135 may be implemented in any desired manner, including, for example, a Field Programmable Gate Array (FPGA), an Application-Specific Integrated Circuit (ASIC), a Graphics Processing Unit (GPU), a General Purpose GPU (GPGPU), a Tensor Processing Unit (TPU), a Neural Processing Unit (NPU), or a Central Processing Unit (CPU) running appropriate software, among other possibilities.

In some embodiments of the disclosure, accelerator 135 may be accessed using device driver 130-2. (Device drivers 130-1 and 130-2 may be referred to collectively as device drivers 130 or drivers 130.) Device drivers 130 may provide a mechanism for the operating system of machine 105 to send requests to particular devices (such as storage device 120 and/or accelerator 135). In some embodiments of the disclosure, device drivers 130 may be implemented in a manner that enables a single device driver 130 to communicate with multiple components: in such embodiments of the disclosure, device drivers 130-1 and 130-2 may be the same device driver 130.

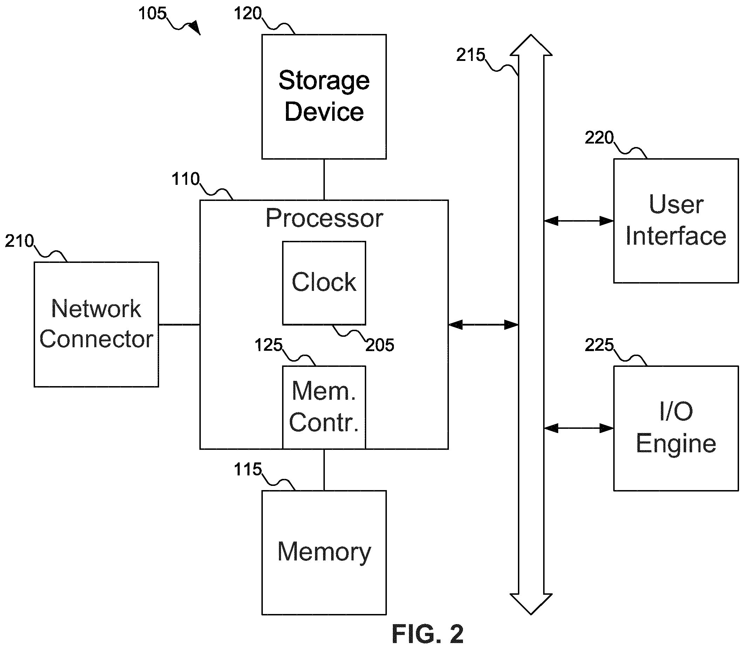

FIG. 2 shows details of machine 105 of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

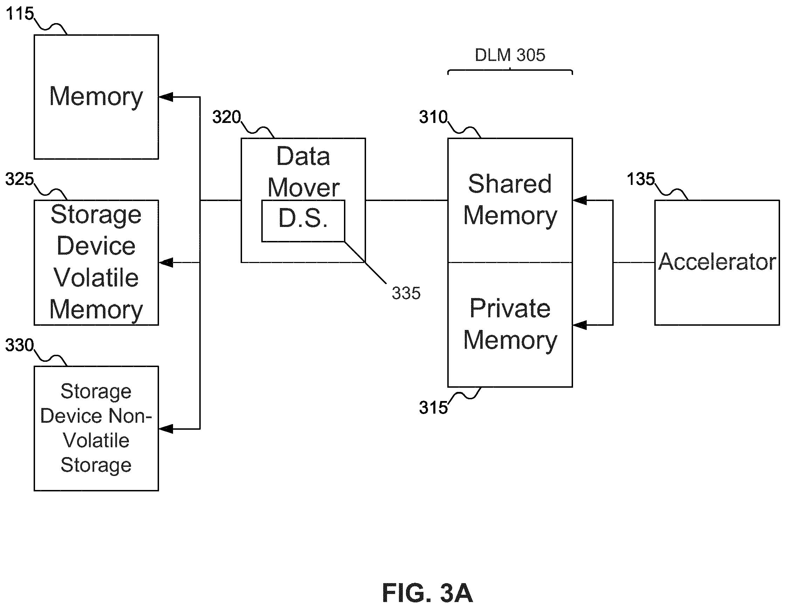

FIG. 3A shows how a data mover may move the output of the accelerator of FIG. 1, according to embodiments of the disclosure. In FIG. 3A, accelerator 135 may include memory 305, which may be called a device local memory or a local memory (to distinguish memory 305 from memory 115). Memory 305 may be local to accelerator 135. Memory 305 may be any desired variety of memory: for example, DRAM, SRAM, or High Bandwidth Memory (HBM).

Memory 305 may be divided into two regions: shared region 310 and private region 315. Shared region 310 may be thought of as a portion of memory 305 accessible to both accelerator 135 and processor 110 of FIG. 1, whereas private region 315 may be thought of as a portion of memory 305 accessible only to accelerator 135. The division between shared region 310 and private region 315 may be either physical or logical. That is, share region 310 and private region 315 may be physically different memories 305 within accelerator 135, or shared region 310 and private region 315 may share the same physical memory 305 but be logically separated.

Shared region 310 and private region 315 may each have a bias mode. Shared region 310 and private region 315 may have, for example, a host bias mode or a device bias mode. In host bias mode, a cache associated with processor 110 of FIG. 1 may be considered the definitive source for the data, and any component (such as accelerator 135 or processor 110 of FIG. 1) may check the cache to ensure they are accessing the most current data. In device bias mode, memory 305 of accelerator 135 may be considered the definitive source for the data, and any component (such as accelerator 135 or processor 110 of FIG. 1) may check memory 305 to ensure they are accessing the most current data. Put another way, if shared region 310 or private region 315 are in device bias mode, accelerator 135 may not need to check a cache of machine 105 of FIG. 1 to check for more current data; but if shared region 310 or private region 315 are in host bias mode, accelerator 135 may need to check a cache of machine 105 of FIG. 1 to check for more current data. (This check may matter more for input than for output, but the bias mode may also affect where data is stored. For example, if shared region 310 is in host bias mode, then accelerator 135 may need to ensure that if the memory address where the output is to be written is also stored in the cache of machine 105 of FIG. 1 that the output is also written to the cache of machine 105 of FIG. 1.)

Because private region 315 may be accessible only to accelerator 135, private region 315 may normally be in device bias mode. The bias mode for private region 315 may be changed, but there is no benefit to setting private region 315 to host bias mode if processor 110 of FIG. 1 does not access private region 315. On the other hand, shared region 310 may normally be in host bias mode. Shared region 310 may be changed to device bias mode if desired, but that change may have an impact on processor 110 of FIG. 1.

When accelerator 135 completes an operation, accelerator 135 may generate some output. This output may be a function of the operations performed by accelerator 135 and/or the data on which accelerator 135 is operating, among other possibilities. For example, if accelerator 135 is performing a data transformation, different input data may result in different output data. Similarly, performing different operations on the same input data may result in different output data. The manner in which the output is generated is not of particular interest, only that accelerator 135 generates the output.

Once the output has been generated, accelerator 135 may store the output somewhere in memory 305. Accelerator 135 may store the output in either shared region 310 or private region 315. The output might be accessible to processor 110 of FIG. 1 (or to data mover 320) only if stored in shared region 310 (and not if stored in private region 315).

The question might arise as to why accelerator output might be stored in private region 315, and therefore not be accessible to processor 110 of FIG. 1. The answer is that accelerator 135 might be performing multiple operations on the data. For example, if accelerator 135 implements two different mathematical functions, and processor 110 of FIG. 1 is interested in the result of applying both mathematical functions (in equation form, processor 110 of FIG. 1 is interested in f(g(x)), where f(x) and g(x) are different functions), then it may suffice for the output of the first operation to be stored in private region 315, and only store the output of the second operation in shared region 310.

If accelerator 135 uses a cache coherent interconnect protocol, accelerator 135 may use a cache command to store the output in either shared region 310 or private region 315. For example, if accelerator 135 uses the CXL protocol, accelerator 135 may use the CXL.cache command to store the output in either shared region 310 or private region 315.

Once the output has been stored in shared region 310, data mover 320 may be able to copy the output to another destination. Again, if accelerator 135 uses the CXL protocol, data mover 320 may access the output using either the CXL.mem or CXL.cache protocols to read the output from shared memory 310. Data mover 320 may then copy the output to any desired location, which may include, for example, memory 115, volatile memory 325 of storage device 120 of FIG. 1, or non-volatile storage 330 of storage device 120 of FIG. 1.

Note that if the output is to be left in shared region 310, the "copy" operation may be implicitly performed. That is, a copy of data from a location to itself is effectively a null operation. Thus, in some embodiments of the disclosure, data mover 320 might not visibly do anything if the output is to be left in shared region 310, but it may be understood that data mover 320 "copied" the output onto itself.

While the above description describes data mover 320 as "copying" the output of accelerator 135 to its eventual destination, a "move" operation may be understood as a combination of a "copy" operation and a "delete" operation. That is, to move the output from an address in shared region 310 to, say, an address in memory 115, the output may be copied from shared region 310 to memory 115, and then the output may be deleted from shared region 310. Thus, whether the data is ultimately "moved" or "copied", both approaches may involve copying the output.

Data mover 320 includes destination selector 335 to select a destination for the output of accelerator 135. Destination selector 335 uses various criteria in determining where to move the output. These criteria include:
1) The hotness of the output of accelerator 135. For example, if the output is to be accessed relatively frequently, it may be useful to move the output to a location in memory 115 that might be more easily accessed than shared region 310. On the other hand, if the output is to be accessed relatively infrequently, it might be useful to move the output to a location in volatile memory 325 or non-volatile storage 330.
2) The speed of memory 115 as compared with the speed of memory 305. If memory 115 is faster to access than memory 305, it might be useful to move the output to a location that may be accessed more quickly than memory 305.
3) The distance to memory 115 as compared with the distance to memory 305. For example, if accelerator 135 is in another system remote from machine 105 of FIG. 1, it might be useful to copy the output to memory 115, which is closer to processor 110 of FIG. 1.
4) The size of the output. If the output is relatively large, leaving the output in memory 305 may limit the amount of memory 305 available to be used by accelerator 135. It might be useful to move the output out of memory 305 to increase the available memory 305 for use by accelerator 135.
5) The persistency of the output. If the output is to be kept available for a long time, it might be useful to move the output to non-volatile storage 330, so that any concern about the data being lost if power is interrupted may be minimized.

Data mover 320 may be implemented in any desired manner. Data mover 320 may be a process running on processor 110 of FIG. 1. Or, data mover 320 may be implemented as hardware using an FPGA, ASIC, GPU, GPGPU, TPU, NPU, CPU, or any other desired hardware. Data mover 320 may also be a separate hardware element from processor 110 of FIG. 1. Or, data mover 320 may be implemented as part of accelerator 135 (either as a process running on a processor of accelerator 135 or using an FPGA, ASIC, GPU, GPGPU, TPU, NPU, or CPU, among other possibilities).

While FIG. 3A shows data mover 320 as being responsible for selecting the destination for the output of accelerator 135, embodiments of the disclosure may have accelerator 135 include an Application Programming Interface (API) supporting commands that enable the user to move the output from shared region 310 to the desired destination. If the user moves the output manually, the user may select the destination based on the criteria above, or may select the destination using any other desired approach.

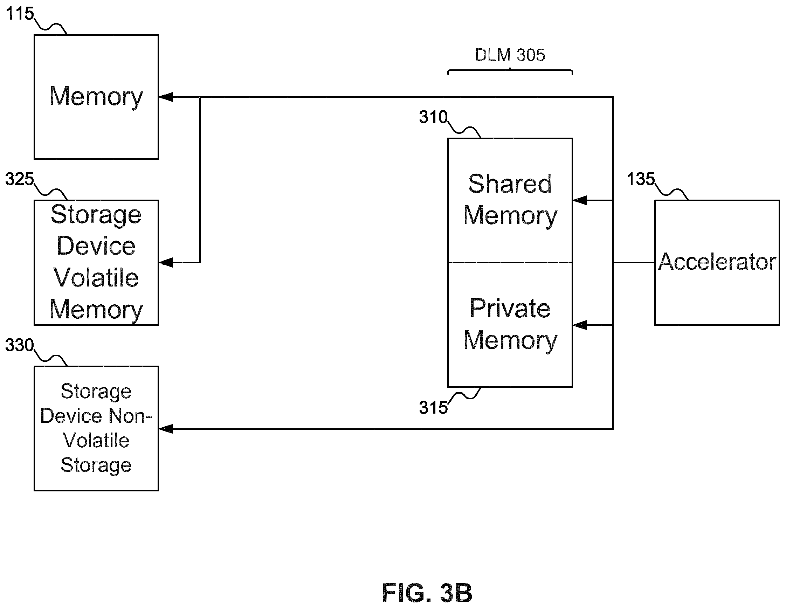

In FIG. 3A, the output of accelerator 135 may be moved by some element separate from accelerator 135 itself. (Even if data mover 320 is implemented within accelerator 135, data mover 320 may be distinct enough from accelerator 135 to be considered separate.) But in some embodiments of the disclosure, accelerator 135 might store the output directly in the desired destination. FIG. 3B illustrates such embodiments of the disclosure.

In FIG. 3B, accelerator 135 may store the output directly in any of shared region 310, private region 315, memory 115, volatile memory 325, or non-volatile storage 330. Accelerator 135 may select the appropriate destination based on criteria such as those discussed above, or processor 135 may use a command via an API of accelerator 135 to specify the desired destination.

While the above description suggests that in FIG. 3B system 105 of FIG. 1 may explicitly identify the destination where accelerator 135 should store the output of accelerator 135. But in some embodiments of the disclosure, the destination might not be specified. In such situations, accelerator 135 of FIG. 1 might include destination selector 335 of FIG. 3A to select the destination, or a destination, such as shared region 310 may be implicitly identified.

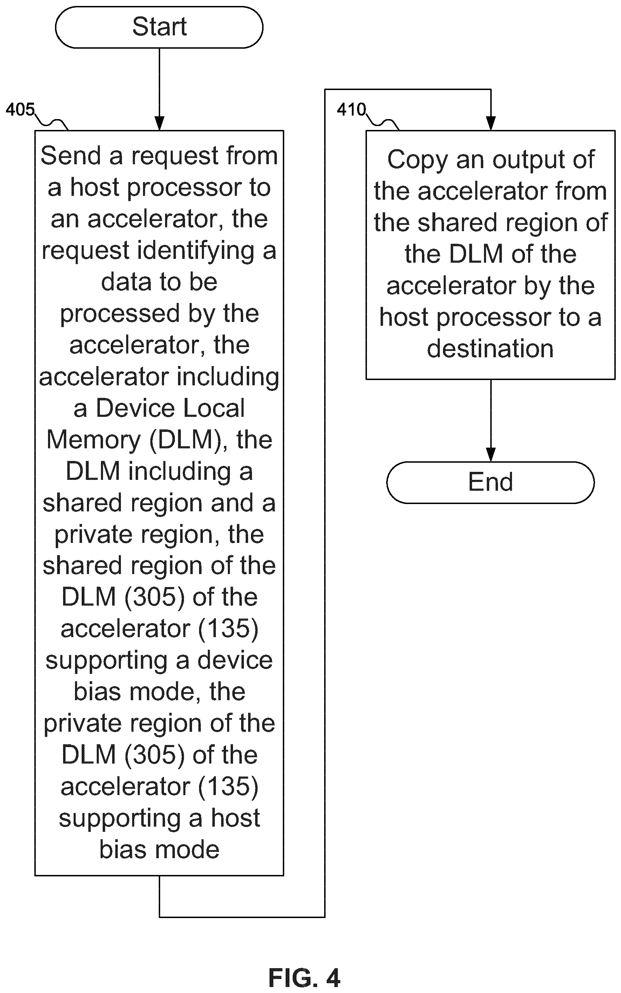

FIG. 4 shows a flowchart of an example procedure for system 105 of FIG. 1, including data mover 320 of FIG. 3A, to move the output of accelerator 135 of FIG. 1, according to embodiments of the disclosure. In FIG. 4, at block 405, processor 110 of FIG. 1 may send a request to accelerator 135 of FIG. 1. The request may identify a data to be processed by accelerator 135 of FIG. 1. At block 410, after accelerator 135 of FIG. 1 has processed the data and produced its output, processor 110 of FIG. 1 may copy the output from shared region 310 of FIGs. 3A-3B to the desired destination.

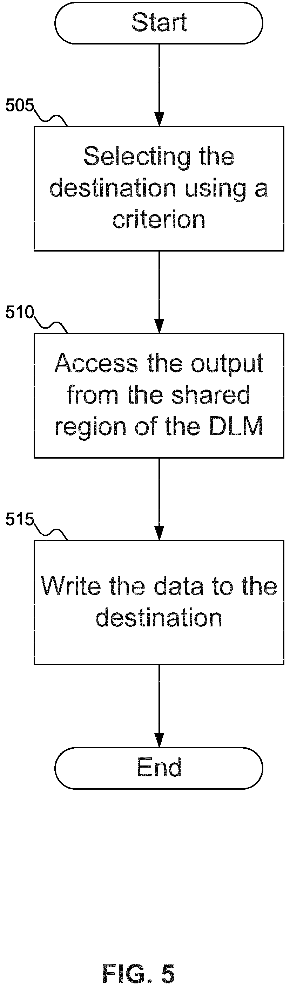

FIG. 5 shows a flowchart of an example procedure for data mover 320 of FIG. 3A to select a destination for the output of accelerator 135 of FIG. 1, according to embodiments of the disclosure. In FIG. 5, at block 505, destination selector 335 of FIG. 3A may select the destination to which data mover 320 of FIG. 3A may copy the output of accelerator 135 of FIG. 1. Destination selector 335 of FIG. 3A may use one or more criteria in selecting the destination for the output of accelerator 135 of FIG. 1. At block 510, data mover 320 of FIG. 3A may access the output of accelerator 135 of FIG. 1 from shared region 310 of FIGs. 3A-3B. At block 515, data mover 320 of FIG. 3A may write the output of accelerator 135 of FIG. 1 to the destination.

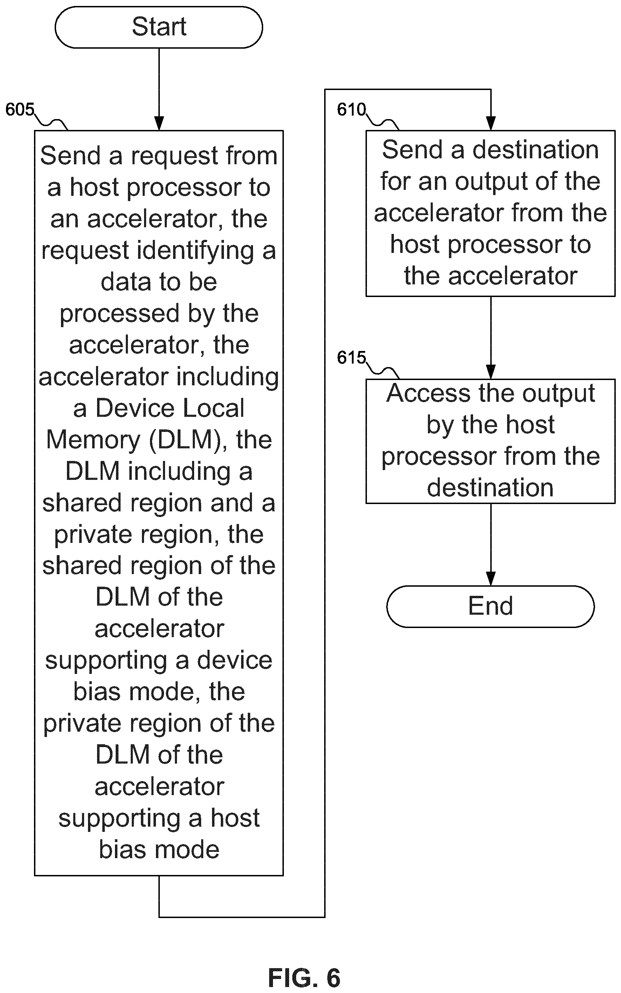

FIG. 6 shows a flowchart of an example procedure for accelerator 135 of FIG. 1 to store the output, according to embodiments of the disclosure. In FIG. 6, at block 605, processor 110 of FIG. 1 may send a request to accelerator 135 of FIG. 1. The request may identify a data to be processed by accelerator 135 of FIG. 1. The request may identify a data to be processed by accelerator 135 of FIG. 1. At block 610, processor 110 of FIG. 1 may send a destination to which accelerator 135 of FIG. 1 may store the output. This destination may be selected, for example, by destination selector 335 of FIG. 3A, using one or more criteria as described above. At block 615, host processor 110 of FIG. 1 may access the output of accelerator 135 of FIG. 1 from the destination.

In FIGs. 4-6, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may include an accelerator that may produce an output. The accelerator may store the output directly in a destination selected for the output, which may be in the host memory, the shared region of the device local memory, the private region of the device local memory, volatile memory of the storage device, or non-volatile storage of the storage device. Alternatively, the accelerator may store the output in the shared region of the device local memory, and a data mover (or the user, using Application Programming Interface (API) commands) may move the output from the shared region of the device local memory to the destination. By storing or moving the output to its destination in this manner, embodiments of the disclosure offer a technical advantage by potentially avoiding moving the data from the device local memory to the host memory before accessing and using the output of the accelerator.

When accelerators generate output data, for the operating system kernel to access the data, the host may copy the data from the memory of the accelerator to the memory of the host, after which the operating system kernel may access the data. This is inefficient, requiring multiple steps and transferring the data from the accelerator memory to the host memory.

Embodiments of the disclosure address these problems by having the accelerator write the data into the accelerator memory using CXL.cache protocol. In this manner, cache coherency of the data may be maintained, and the host may then access the data from the accelerator memory using the CXL.mem protocol.

The data may also be moved to other locations than in the accelerator memory. For example, the data may be placed in the host memory, or in persistent storage. Such placement may be based on, for example, the temperature of the data, the persistency of the data, or the size of the data.

Embodiments of the disclosure include methods for fast access to kernel output using CXL type-2 accelerators. A memory hierarchy with CXL type 2 accelerators may be used output staging. Output movement may be done by (1) the user using Application Programming Interfaces (APIs) or (2) the data mover automatically. APIs may also be used to change bias mode.

Embodiments of the disclosure include lower latency output transfer between host and accelerator kernels. There may be no output data copy overhead, and improved end-to-end application performance.

Data placement may use heuristics to decide where to place output data. Such heuristics may include, for example: data hotness/memory speed/distance: by default, use local DRAM, then accelerator DRAM, then CXL DRAM/SSD; data size: by default, use local DRAM, and if the data is too big, use CXL DRAM/SSD; persistency: if data needs persistency, use CXL SSD.

Embodiments of the disclosure may include user APIs. These APIs may include an API to allocate output data in a different memory: malloc(void * ptr, uint64_t data size, location_t memory_name), where ptr may be a data pointer, data_size may be the size of the data in bytes, and memory_name may be the name of the memory device where data will be allocated: for example, local, accelerator, far.

Another API may be used to switch bias: switch_bias (void * ptr, bias_t bias_mode), where ptr may be a data pointer and bias_mode may be a bias mode (for example, host or device bias)

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machinereadable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processorcontaining system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

## Claims

1. A system (105), comprising:
a host processor (110);
a host memory (115) connected to the host processor (110);
a storage device (120) connected to the host processor (110); and
an accelerator (135) communicating with the host processor (110), the accelerator (135) configured to produce an output, the accelerator (135) including a local memory (305), the local memory (305) including a first region (310) and a second region (315), the first region (310) of the local memory (305) of the accelerator (135) supporting a first mode, the second region (315) of the local memory (305) of the accelerator (135) supporting a second mode,
wherein the accelerator (135) is configured to store the output of the accelerator (135) in a destination, the destination including the host memory (115), the storage device (120), the first region (310) of the local memory (305) of the accelerator (135), or the second region (315) of the local memory (305) of the accelerator (135),
the system further comprising a data mover (320) to copy the output of the accelerator (135) from the first region (310) to one of the host memory (115) or the storage device (120),
wherein the data mover (320) includes a destination selector (335) to select the destination,
wherein the destination selector (335) is configured to select the destination based at least in part on a hotness of the output of the accelerator (135), a first speed of the host memory (115), a second speed of the local memory (305) of the accelerator (135), a first distance of the host memory (115), a second distance of the local memory (305) of the accelerator (135), a size of the output of the accelerator (135), or a persistency of the output of the accelerator (135).

2. The system according to claim 1, wherein:
the storage device (120) includes a volatile memory (325) and a non-volatile storage (330); and
the destination includes the host memory (115), the volatile memory (325) of the storage device (120), the non-volatile storage (330) of the storage device (120), the first region (310), or the second region (315).

3. The system according to claim 1 or 2, wherein the local memory (305) includes Dynamic Random Access Memory, DRAM, Static Random Access Memory, SRAM, or High Bandwidth Memory, HBM.

4. The system according to any one of claims 1 to 3, wherein the accelerator (135) includes an interface command to identify the destination to the accelerator (135).

5. The system according to any one of claims 1 to 4, wherein:
the storage device (120) includes a volatile memory (325) and a non-volatile storage (330); and
the data mover (320) is configured to copy the output of the accelerator (135) from the first region (310) to one of the host memory (115), the volatile memory (325) of the storage device (120), or the non-volatile storage (330) of the storage device (120).

6. A method, comprising:
sending a request from a host processor (110) to an accelerator (135), the request identifying a data to be processed by the accelerator (135), the accelerator (135) including a local memory (305), the local memory (305) including a first region (310) and a second region (315), the first region (310) of the local memory (305) of the accelerator (135) supporting a first mode, the second region (315) of the local memory (305) of the accelerator (135) supporting a second mode; and
copying an output of the accelerator (135) from the first region (310) of the local memory (305) of the accelerator (135) by a data mover (320) to a destination,
wherein the destination is one of a host memory (115) or a storage device (120),
wherein the data mover (320) includes a destination selector (335) to select the destination,
wherein the destination selector (335) selects the destination based at least in part on a hotness of the output of the accelerator (135), a first speed of the host memory (115), a second speed of the local memory (305) of the accelerator (135), a first distance of the host memory (115), a second distance of the local memory (305) of the accelerator (135), a size of the output of the accelerator (135), or a persistency of the output of the accelerator (135).

7. The method according to claim 6, wherein:
the storage device (120) includes a volatile memory (325) and a non-volatile storage (330); and
the destination is one of the host memory (115), the volatile memory (325) of the storage device (120), or the non-volatile storage (330) of the storage device (120).

8. The method according to claim 6 or 7, wherein:
sending the request from the host processor (110) to the accelerator (135) includes sending the request from the host processor (110) to the accelerator (135) using a cache coherent interconnect protocol; and
copying the output of the accelerator (135) from the first region (310) of the local memory (305) of the accelerator (135) by the host processor (110) to the destination includes copying the output of the accelerator (135) from the first region (310) of the local memory (305) of the accelerator (135) by the host processor (110) to the destination using the cache coherent interconnect protocol.

9. The method according to any one of claims 6 to 8, wherein copying the output of the accelerator (135) from the first region (310) of the local memory (305) of the accelerator (135) by the host processor (110) to the destination includes:
accessing the output of the accelerator (135) from the first region (310) of the local memory (305) of the accelerator (135) by the host processor (110); and
writing the output of the accelerator (135) to the destination.

10. The method according to claim 9, wherein copying the output of the accelerator (135) from the first region (310) of the local memory (305) of the accelerator (135) by the host processor (110) to the destination further includes selecting the destination.

11. The method according to any one of claims 6 to 10, wherein copying the output of the accelerator (135) from the first region (310) of the local memory (305) of the accelerator (135) by the host processor (110) to the destination includes copying the output of the accelerator (135) from the first region (310) of the local memory (305) of the accelerator (135) by the host processor (110) to the destination using an interface command.

## Patentansprüche

1. System (105), aufweisend:
einen Host-Prozessor (110);
einen Host-Speicher (115), der mit dem Host-Prozessor (110) verbunden ist;
eine Speichervorrichtung (120), die mit dem Host-Prozessor (110) verbunden ist; und
einen Beschleuniger (135), der mit dem Hostprozessor (110) kommuniziert, wobei der Beschleuniger (135) so konfiguriert ist, dass er eine Ausgabe erzeugt, wobei der Beschleuniger (135) einen lokalen Speicher (305) beinhaltet, wobei der lokale Speicher (305) einen ersten Bereich (310) und einen zweiten Bereich (315) beinhaltet, wobei der erste Bereich (310) des lokalen Speichers (305) des Beschleunigers (135) einen ersten Modus unterstützt, der zweite Bereich (315) des lokalen Speichers (305) des Beschleunigers (135) einen zweiten Modus unterstützt,
wobei der Beschleuniger (135) so konfiguriert ist, dass er die Ausgabe des Beschleunigers (135) an einem Ziel speichert, wobei das Ziel den Hostspeicher (115), die Speichervorrichtung (120), den ersten Bereich (310) des lokalen Speichers (305) des Beschleunigers (135) oder den zweiten Bereich (315) des lokalen Speichers (305) des Beschleunigers (135) beinhaltet,
wobei das System ferner einen Datenmover (320) zum Kopieren der Ausgabe des Beschleunigers (135) aus dem ersten Bereich (310) in den Hostspeicher (115) und/oder die Speichervorrichtung (120) aufweist,
wobei der Datenmover (320) einen Zielselektor (335) zum Auswählen des Ziels beinhaltet,
wobei der Zielselektor (335) so konfiguriert ist, dass er das Ziel zumindest teilweise basierend auf einer Aktualität der Ausgabe des Beschleunigers (135), einer ersten Geschwindigkeit des Hostspeichers (115), einer zweiten Geschwindigkeit des lokalen Speichers (305) des Beschleunigers (135), einer ersten Entfernung des Hostspeichers (115), einer zweiten Entfernung des lokalen Speichers (305) des Beschleunigers (135), einer Größe der Ausgabe des Beschleunigers (135) oder einer Persistenz der Ausgabe des Beschleunigers (135) auswählt.

2. System nach Anspruch 1, wobei:
die Speichervorrichtung (120) einen flüchtigen Speicher (325) und einen nichtflüchtigen Speicher (330) beinhaltet; und
das Ziel den Hostspeicher (115), den flüchtigen Speicher (325) der Speichervorrichtung (120), den nichtflüchtigen Speicher (330) der Speichervorrichtung (120), den ersten Bereich (310) oder den zweiten Bereich (315) beinhaltet.

3. System nach Anspruch 1 oder 2, wobei der lokale Speicher (305) einen dynamischen Direktzugriffsspeicher (DRAM), einen statischen Direktzugriffsspeicher (SRAM) oder einen Speicher mit hoher Bandbreite (HBM) beinhaltet.

4. System nach einem der Ansprüche 1 bis 3, wobei der Beschleuniger (135) einen Schnittstellenbefehl zum Identifizieren des Ziels für den Beschleuniger (135) beinhaltet.

5. System nach einem der Ansprüche 1 bis 4, wobei:
die Speichervorrichtung (120) einen flüchtigen Speicher (325) und einen nichtflüchtigen Speicher (330) beinhaltet; und
der Datenmover (320) so konfiguriert ist, dass er die Ausgabe des Beschleunigers (135) aus dem ersten Bereich (310) in einen von dem Hostspeicher (115), dem flüchtigen Speicher (325) der Speichervorrichtung (120) und/oder dem nichtflüchtigen Speicher (330) der Speichervorrichtung (120) kopiert.

6. Verfahren, das folgende Schritte beinhaltet:
Senden einer Anforderung von einem Hostprozessor (110) an einen Beschleuniger (135), wobei die Anforderung Daten identifiziert, die vom Beschleuniger (135) verarbeitet werden sollen, wobei der Beschleuniger (135) einen lokalen Speicher (305) beinhaltet, wobei der lokale Speicher (305) einen ersten Bereich (310) und einen zweiten Bereich (315) beinhaltet, wobei der erste Bereich (310) des lokalen Speichers (305) des Beschleunigers (135) einen ersten Modus unterstützt und der zweite Bereich (315) des lokalen Speichers (305) des Beschleunigers (135) einen zweiten Modus unterstützt; und
Kopieren einer Ausgabe des Beschleunigers (135) aus dem ersten Bereich (310) des lokalen Speichers (305) des Beschleunigers (135) durch einen Datenmover (320) an ein Ziel,
wobei das Ziel entweder ein Hostspeicher (115) oder eine Speichervorrichtung (120) ist,
wobei der Datenmover (320) einen Zielselektor (335) zum Auswählen des Ziels beinhaltet,
wobei der Zielselektor (335) das Ziel zumindest teilweise basierend auf einer Aktualität der Ausgabe des Beschleunigers (135), einer ersten Geschwindigkeit des Hostspeichers (115), einer zweiten Geschwindigkeit des lokalen Speichers (305) des Beschleunigers (135), einer ersten Entfernung des Hostspeichers (115), einer zweiten Entfernung des lokalen Speichers (305) des Beschleunigers (135), einer Größe der Ausgabe des Beschleunigers (135) oder einer Persistenz der Ausgabe des Beschleunigers (135) auswählt.

7. Verfahren nach Anspruch 6, wobei:
die Speichervorrichtung (120) einen flüchtigen Speicher (325) und einen nichtflüchtigen Speicher (330) beinhaltet; und
das Ziel entweder der Hostspeicher (115), der flüchtige Speicher (325) der Speichervorrichtung (120) oder der nichtflüchtige Speicher (330) der Speichervorrichtung (120) ist.

8. Verfahren nach Anspruch 6 oder 7, wobei:
das Senden der Anforderung von dem Hostprozessor (110) an den Beschleuniger (135) das Senden der Anforderung von dem Hostprozessor (110) an den Beschleuniger (135) unter Verwendung eines cache-kohärenten Verbindungsprotokolls beinhaltet; und
das Kopieren der Ausgabe des Beschleunigers (135) aus dem ersten Bereich (310) des lokalen Speichers (305) des Beschleunigers (135) durch den Hostprozessor (110) an das Ziel das Kopieren der Ausgabe des Beschleunigers (135) aus dem ersten Bereich (310) des lokalen Speichers (305) des Beschleunigers (135) durch den Hostprozessor (110) an das Ziel unter Verwendung des cache-kohärenten Verbindungsprotokolls beinhaltet.

9. Verfahren nach einem der Ansprüche 6 bis 8, wobei das Kopieren der Ausgabe des Beschleunigers (135) aus dem ersten Bereich (310) des lokalen Speichers (305) des Beschleunigers (135) durch den Hostprozessor (110) an das Ziel folgende Schritt beinhaltet:
Zugreifen auf die Ausgabe des Beschleunigers (135) aus dem ersten Bereich (310) des lokalen Speichers (305) des Beschleunigers (135) durch den Hostprozessor (110); und Schreiben der Ausgabe des Beschleunigers (135) an das Ziel.

10. Verfahren nach Anspruch 9, wobei das Kopieren der Ausgabe des Beschleunigers (135) aus dem ersten Bereich (310) des lokalen Speichers (305) des Beschleunigers (135) durch den Hostprozessor (110) an das Ziel ferner das Auswählen des Ziels beinhaltet.

11. Verfahren nach einem der Ansprüche 6 bis 10, wobei das Kopieren der Ausgabe des Beschleunigers (135) aus dem ersten Bereich (310) des lokalen Speichers (305) des Beschleunigers (135) durch den Hostprozessor (110) an das Ziel das Kopieren der Ausgabe des Beschleunigers (135) aus dem ersten Bereich (310) des lokalen Speichers (305) des Beschleunigers (135) durch den Hostprozessor (110) an das Ziel unter Verwendung eines Schnittstellenbefehls beinhaltet.

## Revendications

1. Système (105) comprenant :
un processeur hôte (110) ;
une mémoire hôte (115) connectée au processeur hôte (110) ;
un dispositif de stockage (120) connecté au processeur hôte (110) ; et
un accélérateur (135) en communication avec le processeur hôte (110), l'accélérateur (135) étant configuré pour produire une sortie, l'accélérateur (135) comprenant une mémoire locale (305), la mémoire locale (305) comprenant une première région (310) et une deuxième région (315), la première région (310) de la mémoire locale (305) de l'accélérateur (135) fonctionnant dans un premier mode, la deuxième région (315) de la mémoire locale (305) de l'accélérateur (135) fonctionnant dans un deuxième mode,
ledit accélérateur (135) étant configuré pour stocker la sortie de l'accélérateur (135) dans une destination, la destination comprenant la mémoire hôte (115), le dispositif de stockage (120), la première région (310) de la mémoire locale (305) de l'accélérateur (135) ou la deuxième région (315) de la mémoire locale (305) de l'accélérateur (135),
le système comprenant en outre un moteur de transfert de données (320) destiné à copier la sortie de l'accélérateur (135) depuis la première région (310) vers la mémoire hôte (115) ou le dispositif de stockage (120),
le moteur de transfert de données (320) comprenant un sélecteur de destination (335) destiné à sélectionner la destination,
le sélecteur de destination (335) étant configuré pour sélectionner la destination sur la base au moins en partie d'un degré de chaleur de la sortie de l'accélérateur (135), d'une première vitesse de la mémoire hôte (115), d'une deuxième vitesse de la mémoire locale (305) de l'accélérateur (135), d'une première distance de la mémoire hôte (115), d'une deuxième distance de la mémoire locale (305) de l'accélérateur (135), d'une taille de la sortie de l'accélérateur (135) ou de la persistance de la sortie de l'accélérateur (135).

2. Système selon la revendication 1, dans lequel :
le dispositif de stockage (120) comprend une mémoire volatile (325) et un stockage non volatil (330) ; et
la destination comprend la mémoire hôte (115), la mémoire volatile (325) du dispositif de stockage (120), le stockage non volatil (330) du dispositif de stockage (120), la première région (310) ou la deuxième région (315).

3. Système selon la revendication 1 ou 2, dans lequel la mémoire locale (305) comprend une mémoire vive dynamique, DRAM, une mémoire vive statique, SRAM, ou une mémoire à large bande passante, HBM.

4. Système selon l'une quelconque des revendications 1 à 3, dans lequel l'accélérateur (135) comprend une commande d'interface destinée à identifier la destination à l'accélérateur (135).

5. Système selon l'une quelconque des revendications 1 à 4, dans lequel :
le dispositif de stockage (120) comprend une mémoire volatile (325) et un stockage non volatil (330) ; et
le moteur de transfert de données (320) est configuré pour copier la sortie de l'accélérateur (135) depuis la première région (310) vers e la mémoire hôte (115), la mémoire volatile (325) du dispositif de stockage (120) ou le stockage non volatil (330) du dispositif de stockage (120).

6. Procédé, comprenant :
l'envoi d'une requête d'un processeur hôte (110) à un accélérateur (135), la requête identifiant une donnée devant être traitée par l'accélérateur (135), l'accélérateur (135) comprenant une mémoire locale (305), la mémoire locale (305) comprenant une première région (310) et une deuxième région (315), la première région (310) de la mémoire locale (305) de l'accélérateur (135) fonctionnant dans un premier mode, la deuxième région (315) de la mémoire locale (305) de l'accélérateur (135) fonctionnant dans un deuxième mode ; et
la copie d'une sortie de l'accélérateur (135) depuis la première région (310) de la mémoire locale (305) de l'accélérateur (135) par un moteur de transfert de données (320) vers une destination,
la destination étant la mémoire hôte (115) ou le dispositif de stockage (120),
le moteur de transfert de données (320) comprenant un sélecteur de destination (335) destiné à sélectionner la destination,
le sélecteur de destination (335) sélectionnant la destination sur la base au moins en partie d'un degré de chaleur de la sortie de l'accélérateur (135), d'une première vitesse de la mémoire hôte (115), d'une deuxième vitesse de la mémoire locale (305) de l'accélérateur (135), d'une première distance de la mémoire hôte (115), d'une deuxième distance de la mémoire locale (305) de l'accélérateur (135), d'une taille de la sortie de l'accélérateur (135) ou de la persistance de la sortie de l'accélérateur (135).

7. Procédé selon la revendication 6, dans lequel :
le dispositif de stockage (120) comprend une mémoire volatile (325) et un stockage non volatil (330) ; et
la destination est la mémoire hôte (115) ou la mémoire volatile (325) du dispositif de stockage (120) ou le stockage non volatil (330) du dispositif de stockage (120).

8. Procédé selon la revendication 6 ou 7, dans lequel :
l'envoi de la requête du processeur hôte (110) à l'accélérateur (135) comprend l'envoi de la requête du processeur hôte (110) à l'accélérateur (135) au moyen d'un protocole d'interconnexion cohérent de cache ; et
la copie de la sortie de l'accélérateur (135) depuis la première région (310) de la mémoire locale (305) de l'accélérateur (135) par le processeur hôte (110) vers la destination comprend la copie de la sortie de l'accélérateur (135) depuis la première région (310) de la mémoire locale (305) de l'accélérateur (135) par le processeur hôte (110) vers la destination au moyen du protocole d'interconnexion cohérent de cache.

9. Procédé selon l'une quelconque des revendications 6 à 8, dans lequel la copie de la sortie de l'accélérateur (135) depuis la première région (310) de la mémoire locale (305) de l'accélérateur (135) par le processeur hôte (110) vers la destination comprend :
l'accès à la sortie de l'accélérateur (135) depuis la première région (310) de la mémoire locale (305) de l'accélérateur (135) par le processeur hôte (110) ; et
l'écriture de la sortie de l'accélérateur (135) dans la destination.

10. Procédé selon la revendication 9, dans lequel la copie de la sortie de l'accélérateur (135) depuis la première région (310) de la mémoire locale (305) de l'accélérateur (135) par le processeur hôte (110) vers la destination comprend en outre la sélection de la destination.

11. Procédé selon l'une quelconque des revendications 6 à 10, dans lequel la copie de la sortie de l'accélérateur (135) depuis la première région (310) de la mémoire locale (305) de l'accélérateur (135) par le processeur hôte (110) vers la destination comprend la copie de la sortie de l'accélérateur (135) depuis la première région (310) de la mémoire locale (305) de l'accélérateur (135) par le processeur hôte (110) vers la destination au moyen d'une commande d'interface.
